# EUROPEAN PATENT APPLICATION

(11) **EP 4 513 050 A1**
(43) Date of publication of application: **26.02.2025**
(21) Application number: 22938493.8
(22) Date of filing: 20.04.2022
(51) Int. Cl.: F16D 63/00, H02K 49/02

(54) **EDDY CURRENT-TYPE SPEED REDUCER**

(71) Applicant: NIPPON STEEL CORPORATION, Chiyoda-ku Tokyo 100-8071 (JP)
(72) Inventor: TASAKA, Masahiro, Tokyo 100-8071 (JP)
(74) Representative: Zimmermann & Partner Patentanwälte mbB
(86) International application number: PCT/JP2022/018321
(87) International publication number: WO 2023/203693

(57) **Abstract**

An eddy current deceleration device (10) includes two deceleration device main bodies (11a, 11b) and a control unit (12). The two deceleration device main bodies (11a, 11b) each include a braking member (111) that has a tubular shape and a magnet (114). The braking member (111) is fixed to a propeller shaft (21). The magnet (114) faces toward the braking member (111) in a radial direction of the braking member (111). The control unit (12) controls braking states of the two deceleration device main bodies (11a, 11b). The two deceleration device main bodies (11a, 11b) are arranged in different positions in an axial direction of the propeller shaft (21).

## Description

### TECHNICAL FIELD

The present disclosure relates to an eddy current deceleration device.

### BACKGROUND ART

Hitherto, eddy current deceleration devices have been used as auxiliary brakes for large vehicles such as trucks and buses. Patent Literature 1 discloses an eddy current deceleration device including a braking drum and a rotating yoke body. The braking drum is fixed to a propeller shaft of a vehicle, for example. The rotating yoke body includes a ring-shaped yoke and a plurality of permanent magnets. The plurality of permanent magnets are held on the outer peripheral surface of the yoke. A plurality of pole pieces are arranged between the braking drum and the plurality of permanent magnets.

In Patent Literature 1, braking states of the eddy current deceleration device are controlled by a control unit in three steps. In response to operation by an operator on an operation unit, the control unit switches the deceleration device among a HIGH state in which the largest braking force is exerted, a LOW state in which the braking force is smaller than that in the HIGH state, and an OFF state in which no braking force is exerted. More specifically, upon the operation by the operator on the operation unit, the control unit controls a solenoid valve to adjust air supplied to an air cylinder. The rotating yoke body is rotated by extension and retraction of the air cylinder by a rotation angle corresponding to the operation. When the operator sets the HIGH state on the operation unit, the rotating yoke body is positioned such that each of the permanent magnets faces each of the pole pieces in their entire surface. When the operator sets the LOW state on the operation unit, the rotating yoke body is positioned such that only a half of each permanent magnet overlaps the pole piece. When the operator sets the OFF state on the operation unit, the rotating yoke body is positioned such that each permanent magnet spans across adjacent two pole pieces.

### CITATION LIST

### PATENT LITERATURE

Patent Literature 1: International Application Publication No. WO2011/125542

### SUMMARY OF INVENTION

### TECHNICAL PROBLEM

It is necessary for such an eddy current deceleration device to satisfy a braking force required for a vehicle. In order to increase the braking force of the eddy current deceleration device, the deceleration device main body must be made large, for example, for the purpose of increasing the number of magnets or increasing a relative speed (circumferential speed) between the braking drum and the magnet. However, when the eddy current deceleration device is to be mounted, for example, in a vehicle such as a small bus, for which it is difficult to secure a sufficient mounting space, the deceleration device main body cannot be increased in size due to constraints of mounting spaces, and the braking force required for the vehicle may not be satisfied.

An objective of the present disclosure is to provide an eddy current deceleration device that can be mounted in a vehicle even in a limited space and can satisfy a braking force required for the vehicle.

### SOLUTION TO PROBLEM

An eddy current deceleration device according to the present disclosure includes two deceleration device main bodies and a control unit. The two deceleration device main bodies each include a braking member that has a tubular shape and a magnet. The braking member is fixed to a propeller shaft. The magnet faces toward the braking member in a radial direction of the braking member. The control unit controls braking states of the two deceleration device main bodies. The two deceleration device main bodies are arranged in different positions in an axial direction of the propeller shaft.

### ADVANTAGEOUS EFFECT OF INVENTION

An eddy current deceleration device according to the present disclosure can be mounted in a vehicle even in a limited space and can satisfy a braking force required for the vehicle.

### BRIEF DESCRIPTION OF DRAWINGS

[FIG. 1] FIG. 1 is a schematic diagram illustrating a vehicle on which an eddy current deceleration device according to an embodiment is mounted.
[FIG. 2] FIG. 2 is a longitudinal sectional view of a deceleration device main body included in the eddy current deceleration device according to the embodiment.
[FIG. 3] FIG. 3 is a partial transverse sectional view of the deceleration device main body illustrated in FIG. 2, illustrating a braking state of the deceleration device main body.
[FIG. 4] FIG. 4 is a partial transverse sectional view of the deceleration device main body illustrated in FIG. 2, illustrating a non-braking state of the deceleration device main body.
[FIG. 5] FIG. 5 is a schematic diagram of components of the eddy current deceleration device according to the embodiment.
[FIG. 6] FIG. 6 is a graphical representation illustrating the relationship between the braking torque and time in a first state for the eddy current deceleration device according to the embodiment.
[FIG. 7] FIG. 7 is a graphical representation illustrating the relationship between the braking torque and time in a second state for the eddy current deceleration device according to the embodiment.
[FIG. 8] FIG. 8 is a graphical representation illustrating the relationship between the braking torque and time when two deceleration device main bodies included in the eddy current deceleration device according to the embodiment are alternately placed in the braking state.

### DESCRIPTION OF EMBODIMENT

An eddy current deceleration device according to an embodiment includes two deceleration device main bodies and a control unit. The two deceleration device main bodies each include a braking member that has a tubular shape and a magnet. The braking member is fixed to a propeller shaft. The magnet faces toward the braking member in the radial direction of the braking member. The control unit controls braking states of the two deceleration device main bodies. The two deceleration device main bodies are arranged in different positions in the axial direction of the propeller shaft (first configuration).

In the eddy current deceleration device according to the first configuration, the two deceleration device main bodies are attached to the common propeller shaft. Accordingly, compared to the case in which a single deceleration device main body is attached to a propeller shaft, the braking force against rotation of the propeller shaft can be increased. In this way, a high braking force can be secured for the overall eddy current deceleration device by the plurality of deceleration device main bodies, and therefore, it is not necessary to increase the size of an individual deceleration device main body. Accordingly, the eddy current deceleration device according to the first configuration can be mounted in a vehicle even in a limited space and satisfy the braking force required for the vehicle.

The control unit may be configured to be able to switch among a first state, a second state, and a third state. In the first state, both of the two deceleration device main bodies are in braking states. In the second state, one deceleration device main body of the two deceleration device main bodies is in a braking state and the other deceleration device main body is in a non-braking state. In the third state, both of the two deceleration device main bodies are in non-braking states (second configuration).

In the second configuration, the control unit switches the eddy current deceleration device among the first state, the second state, and the third state. In the first state, since both of the two deceleration device main bodies are in braking states, the eddy current deceleration device exerts a large braking force. In the second state, since one deceleration device main body is in a braking state and the other deceleration device main body is in a non-braking state, the eddy current deceleration device exerts a relatively small braking force. In the third state, since both of the two deceleration device main bodies are in non-braking states, the eddy current deceleration device exerts no braking force.

In the second configuration, for example, choices can be made among the first state, the second state, and the third state depending on the running state of a vehicle. For example, when a vehicle on which the eddy current deceleration device is mounted is travelling on a steep slope downhill and a large braking force is needed, the control unit can place the eddy current deceleration device into the first state in which both of the two deceleration device main bodies are in braking states. In the meantime, for example, when a vehicle on which the eddy current deceleration device is mounted is travelling on a gentle slope downhill and a large braking force is not needed, the control unit can place the eddy current deceleration device into the second state in which only one of the two deceleration device main bodies is in a braking state. When no braking force is needed at all, the control unit can place the eddy current deceleration device into the third state in which both of the two deceleration device main bodies are in non-braking states.

The control unit may be configured to be able to place the two deceleration device main bodies into braking states alternately and consecutively (third configuration).

With a deceleration device main body being in a braking state, when the braking member rotates along with the propeller shaft in a magnetic field generated by the magnet, eddy currents are generated in the braking member. At this time, Joule heat is generated in the braking member and the temperature of the braking member rises. Due to radiant heat from the braking member, the temperature of the magnet facing toward the braking member may rise. Once the temperature of the braking member and the magnet rises, the braking force of the deceleration device main body decreases. Nevertheless, in the third configuration, the control unit is configured to be able to place the two deceleration device main bodies into braking states alternately and consecutively. In this case, while one deceleration device main body is in a braking state, the other deceleration device main body can be placed in a non-braking state for cooling. Once the deceleration device main body is in a braking state, the temperature of the braking member and the magnet increases and the braking force of the deceleration device main body decreases over time, while the deceleration device main body, once cooled, can exert a high braking force again. Accordingly, a predetermined braking force can be maintained for a long time by alternating braking states of the two deceleration device main bodies. For example, when a vehicle on which the eddy current deceleration device is mounted travels a long gentle slope downhill, the braking force suitable for such a travel can be exerted for a long time, according to the eddy current deceleration device according to the third configuration.

Embodiments of the present disclosure will now be described with reference to drawings. In the drawings, the same or equivalent components will be denoted by the same reference numerals, and the description will not be repeated.

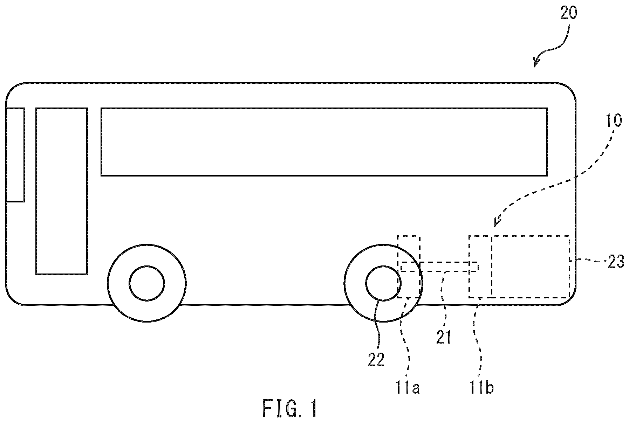

FIG. 1 is a schematic diagram illustrating a vehicle 20 on which an eddy current deceleration device 10 according to the embodiment is mounted. For example, the deceleration device 10 is used as an auxiliary brake of the vehicle 20. FIG. 1 illustrates an example in which the vehicle 20 is a small bus. However, the vehicle 20 may be any other vehicle than a small bus.

In the example illustrated in FIG. 1, the deceleration device 10 is arranged at the rear of the vehicle 20. The deceleration device 10 is attached to a propeller shaft 21 of the vehicle 20. The propeller shaft 21 extends in the front-back direction of the vehicle 20. The front end portion of the propeller shaft 21 is connected to a shaft of a rear axle 22 through a final drive (not illustrated), for example. The rear end portion of the propeller shaft 21 is connected to a power unit 23 including an engine, a crutch, a transmission, and the like, for example. For example, the rear end portion of the propeller shaft 21 is connected to an output shaft (not illustrated) of the transmission. The propeller shaft 21 rotates around the shaft center thereof along with the output shaft of the transmission.

The deceleration device 10 includes two deceleration device main bodies 11a and 11b. The deceleration device main bodies 11a and 11b are arranged in different positions in the axial direction of the propeller shaft 21. In the embodiment, one deceleration device main body 11a is arranged adjacent to the rear axle 22. The other deceleration device main body 11b is arranged adjacent to the power unit 23. The deceleration device main body 11a is arranged in front of the deceleration device main body 11b.

In the embodiment, the deceleration device main bodies 11a and 11b have substantially the same configuration. Hereinafter, the two deceleration device main bodies 11a and 11b are collectively referred to as a deceleration device main body 11 when it is not particularly necessary to distinguish them from one another.

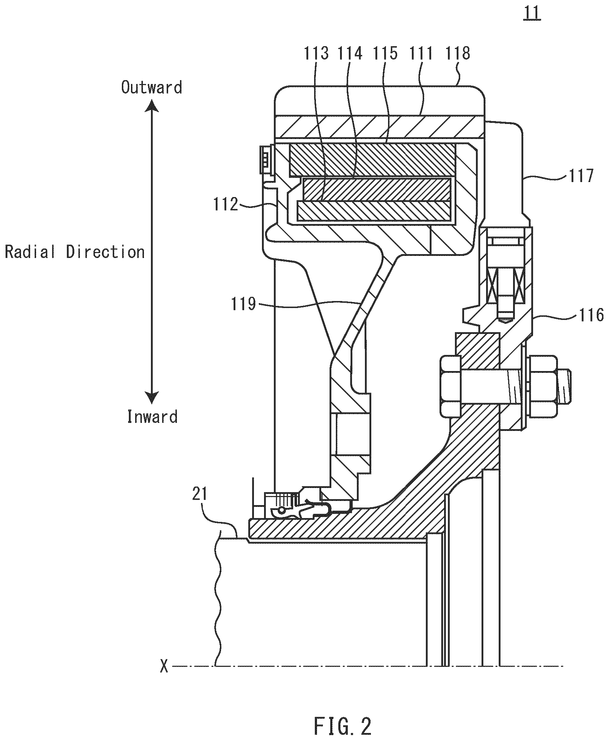

FIG. 2 is a longitudinal sectional view of the deceleration device main body 11. The longitudinal section refers to a section of the deceleration device main body 11 cut in a plane that includes the shaft center X of the propeller shaft 21 to which the deceleration device main body 11 is attached. Hereinafter, the direction in which the shaft center X extends is referred to as an axial direction, and the circumferential direction and the radial direction of a circle centered on the shaft center X are referred to simply as a circumferential direction and a radial direction.

With reference to FIG. 2, the deceleration device main body 11 includes a braking member (rotor) 111, a case 112, a magnet holding member 113, a plurality of magnets 114, and a plurality of pole pieces 115. The braking member 111 rotates around the shaft center X along with the propeller shaft 21. The case 112 is fixed to a non-rotating part of the vehicle 20 (FIG. 1) so that the case 112 does not rotate along with the propeller shaft 21. The case 112 of one deceleration device main body 11a (FIG. 1) is fixed to, for example, a housing of the rear axle 22 (FIG. 1). The case 112 of the other deceleration device main body 11b (FIG. 1) is fixed to, for example, a cover of the transmission of the power unit 23 (FIG. 1). The magnet holding member 113 and the plurality of magnets 114 are arranged within the case 112.

The braking member 111 is made of a conductive material. The braking member 111 has a tubular shape. The braking member 111 has typically a cylindrical shape with the shaft center X of the propeller shaft 21 as the central axis. The braking member 111 is fixed to the propeller shaft 21. The braking member 111 is fixed to the propeller shaft 21 via a hub 116, a spoke 117, and the like. A plurality of fins 118 are formed on the outer peripheral surface of the braking member 111.

The case 112 is arranged inside the braking member 111 in the radial direction. The case 112 is arranged concentrically with the braking member 111. The case 112 is attached to a non-rotating part of the vehicle 20 (FIG. 1) via a support member 119. The magnet holding member 113, the plurality of magnets 114, and the plurality of pole pieces 115 are housed in the case 112.

The magnet holding member 113 is made of a ferromagnetic material. The magnet holding member 113 has a tubular shape. The magnet holding member 113 has typically a cylindrical shape with the shaft center X of the propeller shaft 21 as the central axis. The magnet holding member 113 is arranged substantially concentrically with the braking member 111. For example, the magnet holding member 113 is attached to the case 112 via a ring-shaped slide plate (not illustrated) such that the magnet holding member 113 is slidable in the circumferential direction with respect to the case 112. A braking state and a non-braking state are switched for the deceleration device main body 11 by rotating the magnet holding member 113 around the propeller shaft 21.

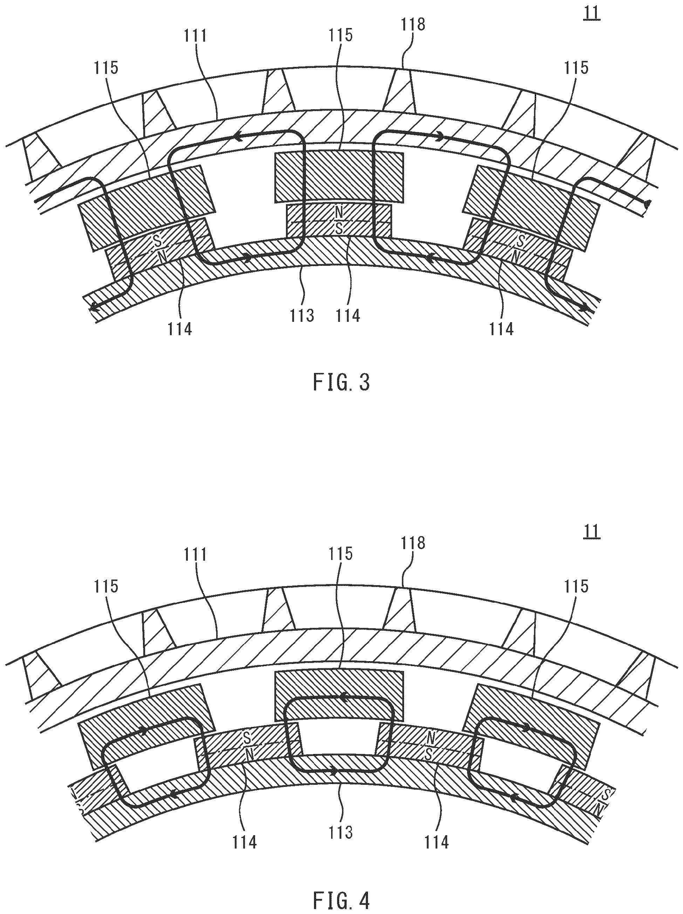

FIG. 3 and FIG. 4 are partial sectional views (transverse sectional views) of the deceleration device main body 11 cut in a plane that is perpendicular to the shaft center X of the propeller shaft 21. In FIG. 3 and FIG. 4, the case 112 is omitted. FIG. 3 illustrates a braking state (brake on) of the deceleration device main body 11. FIG. 4 illustrates a non-braking state (brake off) of the deceleration device main body 11.

As illustrated in FIG. 3, the magnet holding member 113 holds the plurality of magnets 114 on the outer peripheral surface thereof. In the embodiment, each magnet 114 is a permanent magnet. The plurality of permanent magnets 114 are arrayed in the circumferential direction at a predetermined spacing. The permanent magnets 114 are each arranged on the outer peripheral surface of the magnet holding member 113 to face toward the braking member 111 in the radial direction. For example, each permanent magnet 114 is fixed to the magnet holding member 113 with an adhesive.

Each permanent magnet 114 has a pair of magnetic poles (N-pole, S-pole). The orientation of the magnetic poles of each permanent magnet 114 is along the radial direction and is inverse with respect to the orientations of the magnetic poles of both neighboring permanent magnets 114. That is, each permanent magnet 114 has the N-pole or S-pole inward in the radial direction and has opposite S-pole or N-pole outward in the radial direction.

Each pole piece 115 is made of a ferromagnetic material. The plurality of pole pieces 115 are arranged between the braking member 111 and the permanent magnets 114. For example, the plurality of pole pieces 115 are arrayed in the circumferential direction at the same spacing as the permanent magnets 114.

Continuing with FIG. 3, when the deceleration device main body 11 is in a braking state, the permanent magnets 114 are each positioned immediately under the pole piece 115. Accordingly, magnetic fluxes (bold arrows) from each of the permanent magnets 114 pass through the pole piece 115 and reach the braking member 111 that rotates along with the propeller shaft 21 (FIG. 2). This generates eddy currents in an inner circumferential surface of the braking member 111. Due to interaction between the eddy currents and magnetic fields generated by the permanent magnets 114, a braking force is generated in the braking member 111 in the direction opposite to the rotation direction. Furthermore, as the eddy currents are generated, Joule heat is generated in the braking member 111, causing the temperature of the braking member 111 and the permanent magnets 114 to rise.

With reference to FIG. 4, when the deceleration device main body 11 is switched from the braking state to a non-braking state, the magnet holding member 113 rotates to be positioned such that each permanent magnet 114 spans across adjacent pole pieces 115. In the non-braking state, a magnetic circuit is formed among the magnet holding member 113, the permanent magnets 114, and the pole pieces 115, so that the magnetic fluxes (bold arrows) from the permanent magnets 114 do not reach the braking member 111. Consequently, the braking force on the braking member 111 is cancelled.

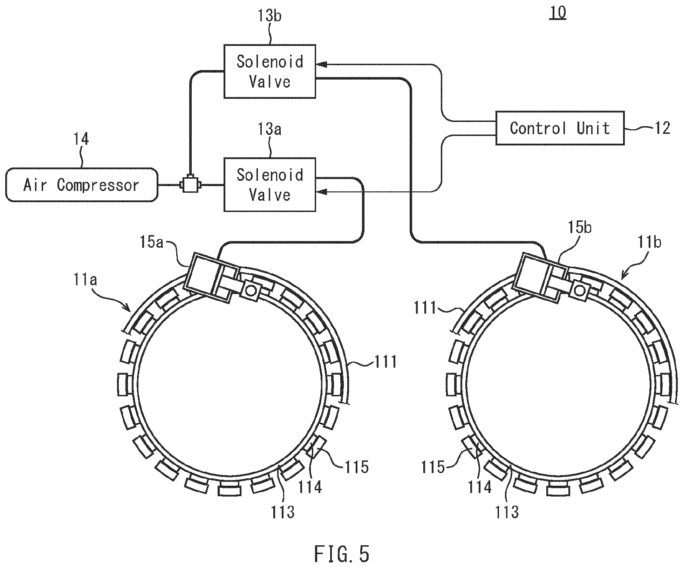

FIG. 5 is a schematic diagram of components of the deceleration device 10. As illustrated in FIG. 5, the deceleration device 10 further includes a control unit 12. The control unit 12 is a computer and includes a central processing unit (CPU) that executes a program, a memory that stores programs and data, and the like. Typically, the control unit 12 is formed from an electronic control unit (ECU) mounted on the vehicle 20 (FIG. 1).

The control unit 12 controls braking states of the deceleration device main bodies 11a and 11b. More specifically, the control unit 12 sends electric signals to solenoid valves 13a and 13b connected to the air compressor 14 to control the solenoid valves 13a and 13b to open and close. Compressed air from the air compressor 14 passes through the solenoid valves 13a and 13b and is supplied to air cylinders 15a and 15b connected to the respective magnet holding member 113 of the deceleration device main bodies 11a and 11b. Extension and retraction of the air cylinders 15a and 15b causes the magnet holding member 113 to rotate around the central axis thereof, which allows each of the deceleration device main bodies 11a and 11b to assume either the braking state (FIG. 3) or the non-braking state (FIG. 4). The operation of the solenoid valves 13a and 13b, the air compressor 14, and the air cylinders 15a and 15b is the same as those in well-known eddy current deceleration devices, and therefore, detailed description is omitted.

The control unit 12 is configured to be able to switch among the first state, the second state, and the third state. In the first state, both of the deceleration device main bodies 11a and 11b are in the braking states (FIG. 3). In the second state, one of the deceleration device main bodies 11a and 11b is in the braking state (FIG. 3), while the other is in the non-braking state (FIG. 4). In the third state, both of the deceleration device main bodies 11a and 11b are in the non-braking states (FIG. 4), in which the deceleration device 10 exerts substantially no braking force. For example, when a driver operates an operation unit provided to the vehicle 20 (FIG. 1), the control unit 12 controls the solenoid valve 13a and/or the solenoid valve 13b in response to the operation to perform switching among the first state, the second state, and third state.

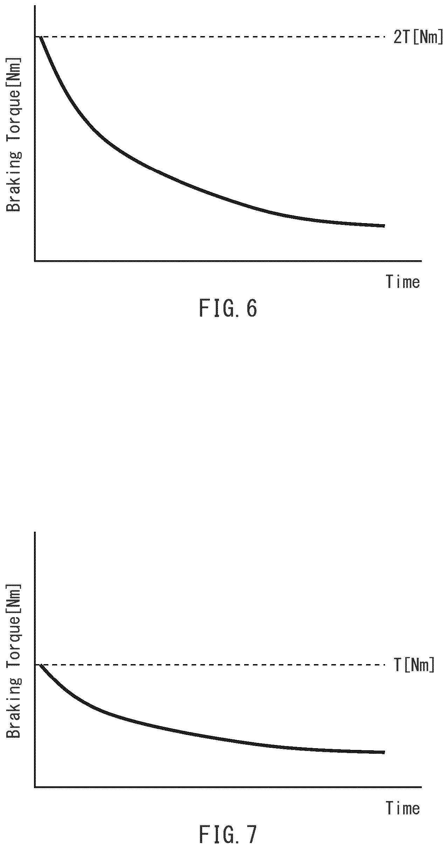

FIG. 6 is a graphical representation illustrating the relationship between the braking torque (braking force) and time in the first state. FIG. 7 is a graphical representation illustrating the relationship between the braking torque and time in the second state. As illustrated in FIG. 6, since both of the deceleration device main bodies 11a and 11b are in the braking states at the same time in the first state, the deceleration device 10 exerts the largest braking force. As illustrated in FIG. 7, since only one of the deceleration device main bodies 11a and 11b is in the braking state in the second state, the deceleration device 10 exerts about a half of the braking force in the first state.

The control unit 12 is preferably configured to be able to place the two deceleration device main bodies 11a and 11b into the braking states alternately and consecutively. That is, the control unit 12 can control the deceleration device main bodies 11a and 11b such that the second state in which the deceleration device main body 11a is in the braking state alternates with the second state in which the deceleration device main body 11b is in the braking state.

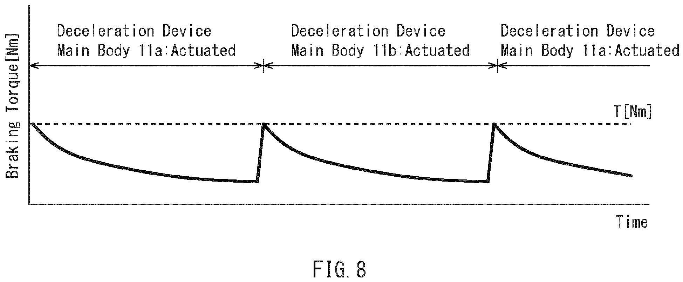

FIG. 8 is a graphical representation illustrating the relationship between the braking torque and time when the deceleration device main bodies 11a and 11b are alternately placed in the braking state. As illustrated in FIG. 8, when the control unit 12 first actuates the deceleration device main body 11a into the braking state and place the deceleration device main body 11b into the non-braking state, only the deceleration device main body 11a exerts the braking force. In the deceleration device main body 11a, the temperature of the braking member 111 and the permanent magnets 114 rises over time, and the braking force decreases. Once the braking force of the deceleration device main body 11a decreases, the control unit 12 switches the deceleration device main body 11a from the braking state to the non-braking state and actuates the deceleration device main body 11b to switch from the non-braking state to the braking state. The deceleration device main body 11b, which has been in the non-braking state immediately before then, can exert a high braking force because the braking member 111 and the permanent magnets 114 are not hot. On the other hand, in the deceleration device main body 11a, which is now in the non-braking state, eddy currents and the associated Joule heat are not generated in the braking member 111. Accordingly, the braking member 111 is no longer heated and the deceleration device main body 11a is naturally cooled (air cooling).

In the deceleration device main body 11b in the braking state, the temperature of the braking member 111 and the permanent magnets 114 rises over time, and the braking force decreases. Once the braking force of the deceleration device main body 11b decreases, the control unit 12 places the deceleration device main body 11b into the non-braking state and actuates the deceleration device main body 11a again into the braking state. The deceleration device main body 11a can exert a high braking force again because it is cooled while in the non-braking state. On the other hand, the deceleration device main body 11b is now in the non-braking state and naturally cooled (air cooling) because the braking member 111 is no longer heated.

When the second state is selected by a driver operation, for example, the control unit 12 can automatically perform control of placing the deceleration device main bodies 11a and 11b into braking states alternately and consecutively (FIG. 8). For example, once the control unit 12 places the deceleration device main body 11a or 11b into the braking state and a predetermined time has passed, the control unit 12 may switch the deceleration device main body that is now in the braking state into the non-braking state and switch the deceleration device main body that is now in the non-braking state into the braking state among the deceleration device main bodies 11a and 11b. Furthermore, for example, the control unit 12 may detect the temperature of the deceleration device main bodies 11a and 11b with a well-known temperature sensor, and when a detected temperature is at or above a predetermined temperature, switch the deceleration device main body that is now in the braking state into the non-braking state and switch the deceleration device main body that is now in the non-braking state into the braking state among the deceleration device main bodies 11a and 11b. Furthermore, for example, according to a continuous braking time previously set in the control unit 12, the control unit 12 may switch between the braking state and the non-braking state of the deceleration device main bodies 11a and 11b. The control unit 12 can determine the alternation between the deceleration device main body 11a and the deceleration device main body 11b depending on the states of the deceleration device main bodies 11a and 11b or conditions previously set (stored) in the control unit 12 itself.

### [Advantageous effect]

In the eddy current deceleration device 10 according to the embodiment, the two deceleration device main bodies 11a and 11b are attached to the common propeller shaft 21. Accordingly, compared to the case in which a single deceleration device main body is attached to the propeller shaft 21, the braking force against rotation of the propeller shaft 21 and the vehicle 20 can be increased. For example, when both of the deceleration device main bodies 11a and 11b are in the braking states at the same time, it is possible to obtain a braking force about two times that in the case in which only one of the deceleration device main bodies 11a and 11b is placed into the braking state. In this way, a braking force can be secured for the overall deceleration device 10 by the deceleration device main bodies 11a and 11b, and therefore, it is not necessary to increase the size of each of the deceleration device main bodies 11a and 11b. Accordingly, the deceleration device 10 can be mounted in the vehicle 20 even in a limited space and satisfy the braking force required for the vehicle 20.

The eddy current deceleration device 10 according to the embodiment uses the deceleration device main bodies 11a and 11b to increase the braking force. With the deceleration device 10, it is not necessary to significantly alter the deceleration device main bodies 11a and 11b themselves from existing products for the purpose of increasing the braking force. Accordingly, it is possible to reduce time required for the development of the deceleration device main bodies 11a and 11b and rapidly provide the deceleration device 10 in response to a request or the like of consumers.

According to the eddy current deceleration device 10 according to the embodiment, choices can be made among the first state, the second state, and the third state depending on the running state of the vehicle, and the like. For example, when the vehicle 20 is travelling on a steep slope downhill and a large braking force is needed, the control unit 12 can place the deceleration device 10 into the first state to exert the largest braking force. In the meantime, for example, when the vehicle 20 is travelling on a gentle slope downhill and a large braking force is not needed, the control unit 12 can place the deceleration device 10 into the second state to obtain a relatively small braking force. When no braking force is needed at all, the control unit 12 may place the deceleration device 10 into the third state.

In the eddy current deceleration device 10 according to the embodiment, two-step switching between the braking state (brake on) and the non-braking state (brake off) is carried out for each of the deceleration device main bodies 11a and 11b, as in the conventional eddy current deceleration device. Accordingly, complex control of, for example, a mechanism (such as an air cylinder) for rotating the magnet holding member 113 is not needed. In the meantime, in the embodiment, the two deceleration device main bodies 11a and 11b are used, and therefore, braking forces can be switched in three steps for the overall deceleration device 10. In the deceleration device 10 according to the embodiment, the first state in which the deceleration device main bodies 11a and 11b are both placed in the braking states, the second state in which only one of the deceleration device main bodies 11a and 11b is placed in the braking state, and the third state in which the deceleration device main bodies 11a and 11b are both placed in the non-braking states can be selected. That is, according to the embodiment, three-step control of braking forces can be achieved without complicating the structure of the deceleration device 10.

In the eddy current deceleration device 10 according to the embodiment, the control unit 12 is configured to be able to place the two deceleration device main bodies 11a and 11b into the braking states alternately and consecutively. In this case, while one of the deceleration device main bodies 11a and 11b is in the braking state, the other of the deceleration device main bodies 11a and 11b can be placed in the non-braking state for cooling (being left to be cooled). The deceleration device main bodies 11a and 11b, which experience a reduction in the braking force in a continuous braking state due to a temperature rise of the braking member 111 and the permanent magnets 114, can exert a high braking force again by being cooled. Accordingly, braking the vehicle 20 can be maintained for a long time by alternating braking states of the two deceleration device main bodies 11a and 11b. For example, when the vehicle 20 travels a long gentle slope downhill, the deceleration device 10 can continue to exert the braking force suitable for such a travel for a long time.

Although the embodiment according to the present disclosure has been described, the present disclosure is not limited to the embodiment and various modifications can be made thereto without departing from the spirt thereof.

The eddy current deceleration device 10 according to the embodiment includes the two deceleration device main bodies 11a and 11b. However, when there is a mounting space in the vehicle 20, the deceleration device 10 may include 3 or more deceleration device main bodies. Those deceleration device main bodies are attached to the common propeller shaft 21 in different positions as in the embodiment. The position of each deceleration device main body on the propeller shaft 21 is not particularly limited.

In the embodiment, for example, the control unit 12 is formed from a single electronic control unit (ECU) and the braking states of the deceleration device main bodies 11a and 11b are controlled by a common electronic control unit. However, the control unit 12 may include a plurality of electronic control units. That is, an electronic control unit may be provided for each of the deceleration device main bodies 11a and 11b. However, when an electronic control unit is provided for each of the deceleration device main bodies 11a and 11b, a driver operation for the braking states of the deceleration device main bodies 11a and 11b may be complicated. Accordingly, it is preferable that the braking states of the deceleration device main bodies 11a and 11b are controlled by a common electronic control unit as in the embodiment.

In the embodiment, the deceleration device main bodies 11a and 11b each include the plurality of permanent magnets 114. That is, the deceleration device main bodies 11a and 11b are a permanent magnet type deceleration device. However, the deceleration device main bodies 11a and 11b may be an electromagnetic type deceleration device. The deceleration device main bodies 11a and 11b may include an electromagnet in place of the magnet holding member 113, the permanent magnets 114, the pole pieces 115, and the like.

### REFERENCE SIGNS LIST

10: eddy current deceleration device
11, 11a, 11b: deceleration device main body
111: braking member
114: magnet
12: control unit
21: propeller shaft

## Claims

1. An eddy current deceleration device comprising:
two deceleration device main bodies each including: a braking member that is fixed to a propeller shaft and has a tubular shape; and a magnet facing toward the braking member in a radial direction of the braking member; and
a control unit that controls braking states of the two deceleration device main bodies, wherein
the two deceleration device main bodies are arranged in different positions in an axial direction of the propeller shaft.

2. The eddy current deceleration device according to claim 1, wherein
the control unit configured to be able to switch among:
a first state in which both of the two deceleration device main bodies are in braking states;
a second state in which one deceleration device main body of the two deceleration device main bodies is in a braking state and the other deceleration device main body is in a non-braking state; and
a third state in which both of the two deceleration device main bodies are in non-braking states.

3. The eddy current deceleration device according to claim 1 or 2, wherein
the control unit is configured to be able to place the two deceleration device main bodies into braking states alternately and consecutively.
